# EUROPEAN PATENT APPLICATION

(11) **EP 4 521 423 A1**
(43) Date of publication of application: **12.03.2025**
(21) Application number: 23196071.7
(22) Date of filing: 07.09.2023
(51) Int. Cl.: H01B 7/14

(54) **SUBMARINE POWER CABLE SYSTEM WITH REDUCED LOSSES**

(71) Applicant: NKT HV Cables AB, 371 60 Lyckeby (SE)
(72) Inventor: ERIKSSON, Erik, Växjö (SE); TYRBERG, Andreas, Lyckeby (SE); THYRVIN, Ola, Karlskrona (SE); PERSBERG, Andreas, Karlskrona (SE)
(74) Representative: Kransell & Wennborg KB

(57) **Abstract**

A submarine power cable system (3) comprising: a first cable section (5) in the form of a dynamic submarine power cable, and a second cable section (7) jointed with the first cable section (5), the second cable section being a static submarine power cable, wherein the first cable section (5) has a first cable section first power core including a first cable section first insulation system, a first cable section first metal sheath covering the first cable section first insulation system, and a first electrically insulating sheath provided around the first cable section first metal sheath, wherein the second cable section (7) has a second cable section first power core jointed with the first cable section first power core, wherein the second cable section first power core includes a second cable section first insulation system, a second cable section first metal sheath covering the second cable section first insulation system, and a first semiconducting sheath provided around the second cable section first metal sheath, and wherein the first cable section first metal sheath and the second cable section first metal sheath are electrically connected to each other, thereby providing a ground point of the first cable section first metal sheath, and wherein the first cable section (5) is shorter than the second cable section (7).

## Description

### TECHNICAL FIELD

The present disclosure generally relates to power cables such as submarine power cables.

### BACKGROUND

Power cables may comprise a power core which includes a conductor and an insulation system surrounding the conductor. The insulation system may be surrounded by a metal sheath or screen, which in the case that the power cable typically is a high voltage submarine cable acts as a water barrier to protect the insulation system from water penetration. The metal sheath may be covered by another polymeric sheath, typically a semiconducting sheath For longer cables, the sheath is always a semiconducting sheath.

Especially for AC power cables, circulating currents and eddy currents may be induced in the metal sheath due to the alternating magnetic field around the conductor. The semiconducting sheath evens out the capacitive currents.

The losses in the metal sheath may for certain type of cables be as much as 20-30% of the total losses. The temperature of the power cable is hence increased significantly by the losses. The temperature of the power cable may be increased even more in case the power cable is a dynamic submarine cable which is lead through a bend stiffener. The maximum allowed power cable conductor temperature restricts the amount of current that can be carried by the power cable at a given time.

Additionally, if the metal sheath breaks, in particular in case a circumferential crack appears, rapid failure may develop as a result of degradation of the insulation system due to, among other things, sparks over the gap in the metal sheath.

### SUMMARY

In view of the above, a general object of the present disclosure is to provide a submarine power cable which solves or at least mitigates problems of the prior art.

There is hence according to a first aspect of the present disclosure provided a submarine power cable system comprising: a first cable section in the form of a dynamic submarine power cable, and a second cable section jointed with the first cable section, the second cable section being a static submarine power cable, wherein the first cable section has a first cable section first power core including a first cable section first insulation system, a first cable section first metal sheath covering the first cable section first insulation system, and a first electrically insulating sheath provided around the first cable section first metal sheath, wherein the second cable section has a second cable section first power core jointed with the first cable section first power core, wherein the second cable section first power core includes a second cable section first insulation system, a second cable section first metal sheath covering the second cable section first insulation system, and a first semiconducting sheath provided around the second cable section first metal sheath, and wherein the first cable section first metal sheath and the second cable section first metal sheath are electrically connected to each other, thereby providing a ground point of the first cable section first metal sheath, and wherein the first cable section is shorter than the second cable section.

In case the power cable system is installed in such a manner that the first cable section first metal sheath is connected to ground via a single point bond, significantly reduced screen losses will occur along the first cable section, in particular since the first cable section first metal sheath is electrically insulated from its surroundings by means of the first electrically insulating sheath. It may thereby be possible to, at the design stage, reduce the conductor size and/or increase the transmitted power of the first cable section. Furthermore, failure of the first cable section first metal screen would not be as critical since no circulating screen current has been induced in the first cable section first metal sheath.

The first semiconducting sheath has a higher electric conductivity and hence lower resistivity than the first electrically insulating sheath.

The first electrically insulating sheath may be provided directly over the first cable section first metal sheath. Alternatively, an adhesive layer may be arranged between the first electrically insulating sheath and the first cable section first metal sheath, making the first electrically insulating sheath and the first cable section first metal sheath adhere to each other.

The first semiconducting sheath may be provided directly over the second cable section first metal sheath. Alternatively, a semiconducting adhesive layer may be arranged between the first semiconducting sheath and the second cable section first metal sheath, making the first semiconducting sheath and the second cable section first metal sheath adhere to each other.

The first electrically insulating sheath may be joined such as directly joined with the first semiconducting sheath.

According to one embodiment the first electrically insulating sheath comprises polymer or consists of polymer.

According to one embodiment the polymer is polyethylene, such as high density polyethylene (HDPE), medium density polyethylene (MDPE) or low density polyethylene (LDPE). Other examples of suitable polymer are polyvinylchloride, polyamide and polyurethane.

The first semiconducting sheath may for example comprise a polymer mixed with a semiconducting material such as carbon black.

According to one embodiment the first cable section has a first cable section second power core including a first cable section second insulation system, a first cable section second metal sheath covering the first cable section second insulation system, and a second electrically insulating sheath provided around the first cable section second metal sheath, wherein the second cable section has a second cable section second power core jointed with the first cable section second power core, wherein the second cable section second power core includes a second cable section second insulation system, a second cable section second metal sheath covering the second cable section second insulation system, and a second semiconducting sheath provided around the second cable section second metal sheath, and wherein the first cable section second metal sheath and the second cable section second metal sheath are electrically connected to each other, thereby providing a ground point of the second cable section second metal sheath.

The second semiconducting sheath has a higher electric conductivity and hence lower resistivity than the second electrically insulating sheath.

The second electrically insulating sheath may be provided directly over the first cable section second metal sheath. Alternatively, an adhesive layer may be arranged between the second electrically insulating sheath and the first cable section second metal sheath, making the second electrically insulating sheath and the first cable section second metal sheath adhere to each other.

The second semiconducting sheath may be provided directly over the second cable section second metal sheath. Alternatively, a semiconducting adhesive layer may be arranged between the second semiconducting sheath and the second cable section second metal sheath, making the second semiconducting sheath and the second cable section second metal sheath adhere to each other.

The second electrically insulating sheath may be joined such as directly joined with the second semiconducting sheath.

According to one embodiment the first cable section has a first cable section third power core including a first cable section third insulation system, a first cable section third metal sheath covering the first cable section third insulation system, and a third electrically insulating sheath provided around the first cable section third metal sheath, wherein the second cable section has a second cable section third power core jointed with the first cable section third power core, wherein the second cable section third power core includes a second cable section third insulation system, a second cable section third metal sheath covering the second cable section third insulation system, and a third semiconducting sheath provided around the second cable section third metal sheath, and wherein the first cable section third metal sheath and the second cable section third metal sheath are electrically connected to each other, thereby providing a ground point of the first cable section third metal sheath.

The third semiconducting sheath has a higher electric conductivity and hence lower resistivity than the third electrically insulating sheath.

The third electrically insulating sheath may be provided directly over the first cable section third metal sheath. Alternatively, an adhesive layer may be arranged between the third electrically insulating sheath and the first cable section third metal sheath, making the third electrically insulating sheath and the first cable section third metal sheath adhere to each other.

The third semiconducting sheath may be provided directly over the second cable section third metal sheath. Alternatively, a semiconducting adhesive layer may be arranged between the third semiconducting sheath and the second cable section third metal sheath, making the third semiconducting sheath and the second cable section third metal sheath adhere to each other.

The third electrically insulating sheath may be joined such as directly joined with the third semiconducting sheath.

According to one embodiment, of the first cable section first insulation system, the first cable section second insulation system and the first cable section third insulation system, the first electrically insulating sheath only covers the first cable section first insulation system, the second electrically insulating sheath only covers the first cable section second insulation system and the third electrically insulating sheath only covers the first cable section third insulation system.

According to one embodiment the second electrically insulating sheath comprises polymer or consists of polymer, and the third electrically insulating sheath comprises polymer or consists of polymer.

According to one embodiment the polymer is polyethylene, such as high density polyethylene (HDPE), medium density polyethylene (MDPE) or low density polyethylene (LDPE). Other examples of suitable polymer are polyvinylchloride, polyamide and polyurethane.

According to one embodiment the submarine power cable system is an AC power cable system.

According to one embodiment the power cable is a submarine power cable.

According to one embodiment the first cable section first metal sheath is a corrugated metal sheath.

According to one embodiment the first cable section comprises a first armour surrounding the first cable section first power core and the second cable section comprises a second armour surrounding the second cable section first power core.

According to one embodiment the first cable section is at least one order of magnitude shorter than the second cable section.

According to one embodiment the first cable section first metal sheath is configured to be connected to ground only in a region in which it is connected with the second cable section first metal sheath, whereby the first cable section first metal sheath has a single point ground.

The first cable section first metal sheath is according to this example hence connected to ground only in the transition region between the first cable section and the second cable section.

There is according to a second aspect of the present disclosure provided an offshore system comprising a floating structure and a submarine power cable system of the first aspect, wherein the dynamic submarine power cable is suspended from the floating structure to the seabed, wherein the first cable section first metal sheath is connected to ground only in a region in which it is connected with the second cable section first metal sheath, whereby the first cable section first metal sheath has a single point ground.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a conceptual layout of an offshore system ;
Fig. 2 schematically shows a cross section of one example of a first cable section;
Fig. 3 schematically shows a cross section of one example of a second cable section; and
Fig. 4 schematically shows the interior of a joint.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

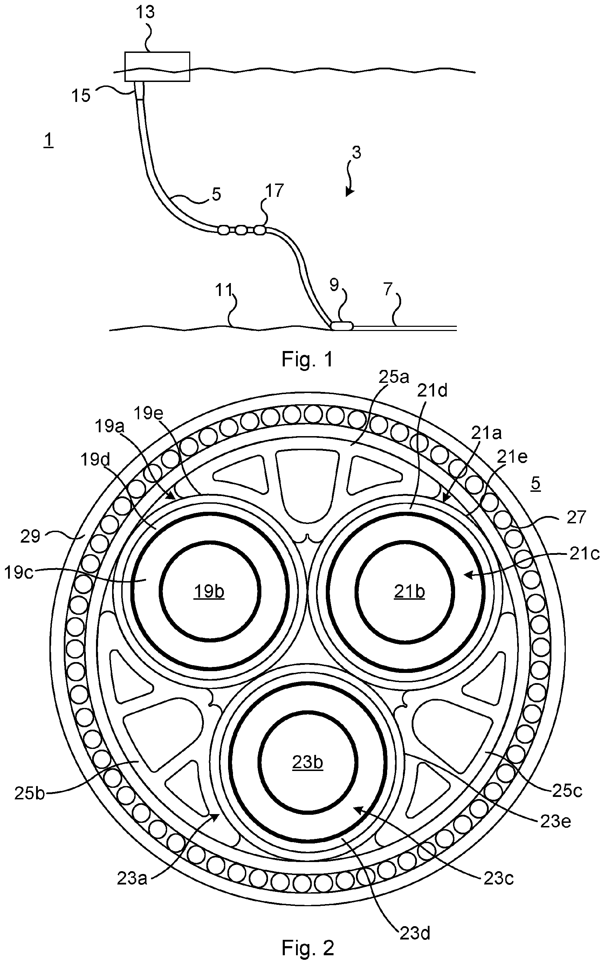

Fig. 1 shows a conceptual layout of an example of an offshore system 1. The offshore system 1 comprises a submarine power cable system 3. The submarine power cable system 3 may be an AC power cable system. The offshore system 1 also comprises a floating structure 13.

The submarine power cable system 3 comprises a first cable section 5 and a second cable section 7. The first cable section 5 is a dynamic submarine power cable, and the second cable section 7 is a static submarine power cable. The submarine power cable system 3 furthermore comprises a joint 9. The first cable section 5 and the second cable section 7 are jointed by means of the joint 9. The joint 9 may be a vulcanised factory joint, a flexible transition joint, or a rigid sea joint. The rigid sea joint may be built offshore. The first cable section 5 extends between the joint 9 which is located on the seabed 11 and the topside floating structure 13, such as a floating platform, a floating substation, a floating power transformer, a floating power converter, or a floating wind turbine. According to the example depicted in Fig. 1, the first cable section 5 extends through a bend stiffener 15 connected to the floating structure 13 to restrict the bending of the first cable section 5 due to e.g., movement of the floating structure 13.

One or more buoyancy devices 17 may be mounted to the first cable section 5 to reduce the impact related to wave motion on the first cable section 5.

The first cable section 5 is shorter than the second cable section 7. For example, the first cable section 5 may be at least one order of magnitude shorter than the second cable section 7. The first cable section 5 is typically shorter than 2000 metres. The second cable section 7 is typically longer than 5000 metres, such as longer than 10000 metres.

The submarine power cable system 3 will in the following be exemplified by a three-phase power cable, but could alternatively have fewer electrical phases, such as a single electrical phase, or more than three electrical phases.

Fig. 2 shows a cross section of an example of the first cable section 5. The cross section may be taken anywhere between the offshore structure 13 and the joint 9.

The first cable section 5 comprises a plurality of first cable section power cores, namely a first cable section first power core 19a, a first cable section second power core 21a, and a first cable section third power core 23a. In the present example, the three first cable section power cores 19a-23a are arranged in a stranded configuration along the axial direction of the first cable section 5.

The first cable section first power core 19a comprises a first cable section first electrical conductor 19b. The first cable section first power core 19a furthermore comprises a first cable section first insulation system 19c configured to electrically insulate the first cable section first electrical conductor 19b. The first cable section first power core 19a also comprises a first cable section first metal sheath 19d which surrounds/covers the first cable section first insulation system 19c. The first cable section first metal sheath 19d may for example be made of copper, stainless steel, lead or a copper alloy. The first cable section first metal sheath 19d may be corrugated in the axial direction of the first cable section 5. The first cable section first power core 19a comprises a first electrically insulating sheath 19e surrounding the first cable section first metal sheath 19d. The first electrically insulating sheath 19e may be extruded on the first cable section first metal sheath 19d. The first electrically insulating sheath 19e is electrically insulating and may for example comprise or consist of a polymer such as polyethylene.

The first cable section second power core 21a comprises a first cable section second electrical conductor 21b. The first cable section second power core 21a furthermore comprises a first cable section second insulation system 21c configured to electrically insulate the first cable section second electrical conductor 21b. The first cable section second power core 21a also comprises a first cable section second metal sheath 21d which surrounds/covers the first cable section second insulation system 21c. The first cable section second metal sheath 21d may for example be made of copper, stainless steel, lead or a copper alloy. The first cable section second metal sheath 21d may be corrugated in the axial direction of the first cable section 5. The first cable section second power core 21a comprises a second electrically insulating sheath 21e surrounding the first cable section second metal sheath 21d. The second electrically insulating sheath 21e may be extruded on the first cable section second metal sheath 21d. The second electrically insulating sheath 21e is electrically insulating and may for example comprise or consist of a polymer such as polyethylene.

The first cable section third power core 23a comprises a first cable section third electrical conductor 23b. The first cable section third power core 23a furthermore comprises a first cable section third insulation system 23c configured to electrically insulate the first cable section third electrical conductor 23b. The first cable section third power core 23a also comprises a first cable section third metal sheath 23d which surrounds/covers the first cable section third insulation system 23c. The first cable section third metal sheath 23d may for example be made of copper, stainless steel, lead or a copper alloy. The first cable section third metal sheath 23d may be corrugated in the axial direction of the first cable section 5. The first cable section third power core 23a comprises a third electrically insulating sheath 23e surrounding the first cable section third metal sheath 23d. The third electrically insulating sheath 23e may be extruded on the first cable section third metal sheath 23d. The third electrically insulating sheath 23e is electrically insulating and may for example comprise or consist of a polymer such as polyethylene.

The first cable section 5 may furthermore comprise a plurality of filler profiles 25a-25c extending along and arranged between the three first cable section power cores 19a-23a to restrict radial deformation of the first cable section 5.

The first cable section 5 may furthermore comprise a plurality of first armour wires 27 which form a first armour of the first cable section 5. The first armour wires 27 are arranged radially outside of the three first cable section power cores 19a-21a and extend axially along the first cable section 5 in a helical manner.

The first cable section 5 furthermore comprises an outer sheath or outer serving 29, which forms the outermost layer of the first cable section 5. The outer sheath or serving 29 is hence arranged radially outwards of the first armour wires 27.

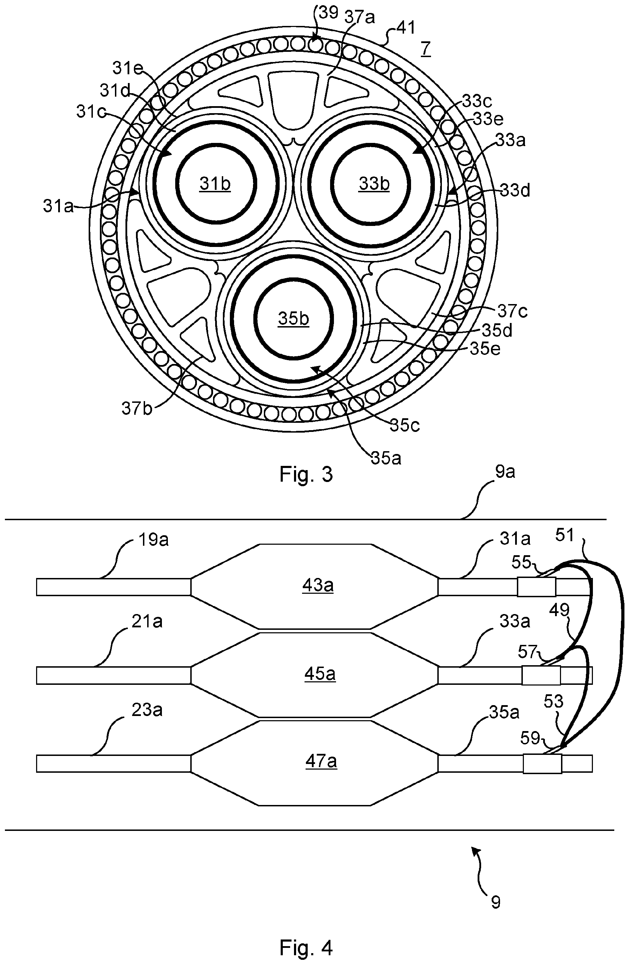

Fig. 3 shows a cross section of an example of the second cable section 7.

The second cable section 7 comprises a plurality of second cable section power cores, namely a second cable section first power core 31a, a second cable section second power core 33a, and a second cable section third power core 35a. In the present example, the three second cable section power cores 31a-35a are arranged in a stranded configuration along the axial direction of the second cable section 7.

The second cable section first power core 31a comprises a second cable section first electrical conductor 31b. The second cable section first power core 31a furthermore comprises a second cable section first insulation system 31c configured to electrically insulate the second cable section first electrical conductor 31b. The second cable section first power core 31a also comprises a second cable section first metal sheath 31d which surrounds/covers the second cable section first insulation system 31c. The second cable section first metal sheath 31d may for example be made of a stainless steel, copper, a copper alloy, aluminium, or lead. The second cable section first power core 31a comprises a first semiconducting sheath 31e surrounding the second cable section first metal sheath 31d. The first semiconducting sheath 31e may be extruded on the second cable section first metal sheath 31d. The first semiconducting sheath 31e may for example comprise or consist of a polymer such as polyethylene, mixed with an electrically conducting material such as carbon black to obtain its semiconducting property.

The second cable section second power core 33a comprises a second cable section second electrical conductor 33b. The second cable section second power core 33a furthermore comprises a second cable section second insulation system 33c configured to electrically insulate the second cable section second electrical conductor 33b. The second cable section second power core 33a also comprises a second cable section second metal sheath 33d which surrounds/covers the second cable section second insulation system 33c. The second cable section second metal sheath 33d may for example be made of a stainless steel, copper, a copper alloy, aluminium, or lead. The second cable section second power core 33a comprises a second semiconducting sheath 33e surrounding the second cable section second metal sheath 33d. The second semiconducting sheath 33e may be extruded on the second cable section second metal sheath 33d. The second semiconducting sheath 33e may for example comprise or consist of a polymer such as polyethylene, mixed with e.g., carbon black to obtain its semiconducting property.

The second cable section third power core 35a comprises a second cable section third electrical conductor 35b. The second cable section third power core 35a furthermore comprises a second cable section third insulation system 35c configured to electrically insulate the second cable section third electrical conductor 35b. The second cable section third power core 35a also comprises a second cable section third metal sheath 35d which surrounds/covers the second cable section third insulation system 35c. The second cable section third metal sheath 35d may for example be made of a stainless steel, copper, a copper alloy, aluminium, or lead. The second cable section third power core 35a comprises a third semiconducting sheath 35e surrounding the second cable section third metal sheath 35d. The third semiconducting sheath 35e may be extruded on the second cable section third metal sheath 35d. The third semiconducting sheath 35e may for example comprise or consist of a polymer such as polyethylene, mixed with e.g., carbon black to obtain its semiconducting property.

The second cable section 7 may furthermore comprise a plurality of filler profiles 37a-37c extending along and arranged between the three second cable section power cores 31a-35a.

The second cable section 7 may comprise a plurality of first armour wires 39 which form a second armour of the second cable section 7. The second armour wires 39 are arranged radially outside of the three second cable section power cores 31a-35a.

The second cable section 7 also comprises an outer sheath or outer serving 41, which forms the outermost layer of the second cable section 7.

Fig. 4 schematically shows the interior of the joint 9, when exemplified by a rigid sea joint. The first cable section first power core 19a is jointed with the second cable section first power core 31a. The first cable section second power core 21a is jointed with the second cable section second power core 33a. The first cable section third power core 23a is jointed with the second cable section third power core 35a. The first cable section first conductor 19b is hence for example joined with the second cable section first conductor 31b, and the first cable section first insulation system 19c is joined with the second cable section first insulation system 31c.

The joint 9 in the form of a rigid sea joint may comprise a plurality of rigid inner casings 43a-47a, one for each electrical phase. The first cable section first metal sheath 19d and the second cable section first metal sheath 31d is according to the example joined with a first rigid inner casing 43a, along their entire periphery for example by soldering or welding, to make a watertight connection with the first rigid inner casing 43a. Electrical connections between the first cable section first electrical conductor 19b and the second cable section first electrical conductor 31b is made inside the first rigid inner casing 43a. The connections described above are made in the same way for the other two power cores 21a and 33a, and 23a and 35a.

The joint 9 may comprise a rigid outer casing 9a, which contains all the rigid inner casings 43a, 45a, and 47a.

The submarine power cable system 3 also comprises a plurality of connection cables or leads 49, 51, 53 and breakouts 55, 57, 59. The connection cables 49-53 and the breakouts 55-59 may be arranged inside the rigid outer casing 9a. A first connection cable 49 is electrically connected to the second cable section first metal sheath 31d via a first breakout 55 in the second cable section first cable core 31a, and to the second cable section second metal sheath 33d via a second breakout 57 in the second cable section second cable core 33a. A second connection cable 51 is electrically connected to the second cable section first metal sheath 31d via the first breakout 55, and to the second cable section third metal sheath 35d via a third breakout 59 in the second cable section third cable core 35a. A third connection cable 53 is electrically connected to the second cable section second metal sheath 33d via the second breakout 57, and to the second cable section third metal sheath 35d via the third breakout 59. This configuration is a Δ-connection. Alternatively, the leads 49, 51 and 53 may be connected in a Wye-connection. Circulating currents in the second cable section metal sheaths 31d, 33d, 35d in the joint region may thereby be reduced or eliminated.

Alternatively, the connections by means of the connection cables 49-53 could be between the first cable section metal sheaths 19d, 21d, and 23d inside the rigid outer casing.

Each breakout 55, 57 and 59 may according to one example comprise a metal braid connected electrically to the underlying second cable section first, second or third metal sheath 31d, 33d, 35d, and a sleeve or cylindrical connector arranged around and attached to the metal braid, for example by crimping or by means of one or more shear off screws. The metal braid and part of the sleeve or cylindrical connector may be covered by means of tape and/or one or more shrinking tubes. The region of the second cable section first, second or third power core 31a, 33a, 35a featuring the breakout 55, 57 and 59 may also comprise a shrinking tube, to ensure watertightness. The leads 49, 51, 53 are connected to the sleeves or cylindrical connectors. In Fig. 4, showing the Δ-connection, two leads 49, 51, 53 are connected to each breakout 55, 57, 59. In the case of a Wye-connection, each lead 49, 51, 53 is connected to a respective breakout 55, 57, 59 at one end and to each other at their other end. The metal braids may be soft soldered to the underlying second cable section first, second or third metal sheath 31d, 33d, 35d, for example through an opening that has been made in the respective first, second, and third semiconducting sheath 31e, 33e, 35e. If the connections by means of the connection cables 49-53 are instead between the first cable section metal sheaths 19d, 21d, and 23d, the metal braids may be electrically connected to the underlying first cable section first, second, or third metal sheath 19d, 21d, 23d.According to one example the joint could be a vulcanised factory joint comprising the connection cables to electrically connect the metal sheaths 31d, 33d and 35d to each other, or alternatively, the metal sheaths 19d, 21d, and 23d, in a region of the joint.

When installed, the second cable section first metal sheath 31d, the second cable section second metal sheath 33d, and the second cable section third metal sheath 35d are grounded, for example at landfall, i.e., at the other end of the second cable section 7. The first cable section first metal sheath 19d, the first cable section second metal sheath 21d, and the first cable section third metal sheath 23d are also grounded by means of their connection to the corresponding second cable section metal sheath 31d-35d. This grounding forms a single point bonding or ground of the first cable section first metal sheath 19d, the first cable section second metal sheath 21d and the first cable section third metal sheath 23d. At the other end of the first cable section 5 there is hence no grounding of the first cable section first metal sheath 19d, the first cable section second metal sheath 21d, and the first cable section third metal sheath 23d, when the submarine power cable system 3 has been installed.

As noted above, the first cable section first metal sheath 19d, the first cable section second metal sheath 21d, and the first cable section third metal sheath 23d are not connected to ground at the terminating end of the first cable section 5, i.e., at the floating structure 13. Due to the electrically insulating property of the first electrically insulating sheath 19e, the second electrically insulating sheath 21e and the third electrically insulating sheath 23e, the first cable section first metal sheath 19d, second metal sheath 21d and third metal sheath 23d will only have a single point bonding/ground. No circulating screen currents will therefore be introduced in the metal sheaths 19d-23d, and hence a significant reduction of the losses will occur in the metal sheaths 19d-23d.

When designing the submarine power cable system 3 the length of the first cable section 5 should have a length no longer than that the potential difference between the metal sheaths 19d-23d at their single point bonding and the first cable section's 5 terminal end is within an acceptable range.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A submarine power cable system (3) comprising:
a first cable section (5) in the form of a dynamic submarine power cable, and
a second cable section (7) jointed with the first cable section (5), the second cable section being a static submarine power cable,
wherein the first cable section (5) has a first cable section first power core (19a) including a first cable section first insulation system (19c), a first cable section first metal sheath (19d) covering the first cable section first insulation system (19c), and a first electrically insulating sheath (19e) provided around the first cable section first metal sheath (19d),
wherein the second cable section (7) has a second cable section first power core (31a) jointed with the first cable section first power core (19a), wherein the second cable section first power core (31a) includes a second cable section first insulation system (31c), a second cable section first metal sheath (31d) covering the second cable section first insulation system (31c), and a first semiconducting sheath (31e) provided around the second cable section first metal sheath (31d), and
wherein the first cable section first metal sheath (19d) and the second cable section first metal sheath (31d) are electrically connected to each other, thereby providing a ground point of the first cable section first metal sheath (19d) and wherein the first cable section (5) is shorter than the second cable section (5).

2. The submarine power cable system (3) as claimed in claim 1, wherein the first electrically insulating sheath (19e) comprises polymer or consists of polymer.

3. The submarine power cable system (3) as claimed in claim 2, wherein the polymer is polyethylene.

4. The submarine power cable system (3) as claimed in any of the preceding claims, wherein the first cable section (5) has a first cable section second power core (21a) including a first cable section second insulation system (21c), a first cable section second metal sheath (21d) covering the first cable section second insulation system (21c), and a second electrically insulating sheath (21e) provided around the first cable section second metal sheath (21d),
wherein the second cable section (7) has a second cable section second power core (33a) jointed with the first cable section second power core (21a), wherein the second cable section second power core (33a) includes a second cable section second insulation system (33c), a second cable section second metal sheath (33d) covering the second cable section second insulation system (33c), and a second semiconducting sheath (33e) provided around the second cable section second metal sheath (33d), and wherein the first cable section second metal sheath (21d) and the second cable section second metal sheath (33d) are electrically connected to each other, thereby providing a ground point of the second cable section second metal sheath (33d).

5. The submarine power cable system (3) as claimed in claim 4, wherein the first cable section (5) has a first cable section third power core (23a) including a first cable section third insulation system (23c), a first cable section third metal sheath (23d) covering the first cable section third insulation system (23c), and a third electrically insulating sheath (23e) provided around the first cable section third metal sheath (23d),
wherein the second cable section (7) has a second cable section third power core (35a) jointed with the first cable section third power core (23a), wherein the second cable section third power core (35a) includes a second cable section third insulation system (35c), a second cable section third metal sheath (35d) covering the second cable section third insulation system (35c), and a third semiconducting sheath (35e) provided around the second cable section third metal sheath (35d), and wherein the first cable section third metal sheath (23d) and the second cable section third metal sheath (35d) are electrically connected to each other, thereby providing a ground point of the first cable section third metal sheath (23d).

6. The submarine power cable system (3) as claimed in claim 5, wherein of the first cable section first insulation system (19c), the first cable section second insulation system (21c) and the first cable section third insulation system (23c), the first electrically insulating sheath (19e) only covers the first cable section first insulation system (19c), the second electrically insulating sheath (21e) only covers the first cable section second insulation system (21c) and the third electrically insulating sheath (23e) only covers the first cable section third insulation system (23c).

7. The submarine power cable system (3) as claimed in claim 5 or 6, wherein the second electrically insulating sheath (21e) comprises polymer or consists of polymer, and the third electrically insulating sheath (23e) comprises polymer or consists of polymer.

8. The submarine power cable system (3) as claimed in claim 7, wherein the polymer is polyethylene.

9. The submarine power cable system (3) as claimed in any of the preceding claims, wherein the power cable system (3) is an AC power cable system.

10. The submarine power cable system (3) as claimed in any of the preceding claims, wherein the first cable section first metal sheath (19d) is a corrugated metal sheath.

11. The submarine power cable system (3) as claimed in any of the preceding claims, wherein the first cable section (5) comprises a first armour surrounding the first cable section first power core (19a) and the second cable section (7) comprises a second armour surrounding the second cable section first power core (31a).

12. The submarine power cable system (3) as claimed in any of the preceding claims, wherein the first cable section (5) is at least one order of magnitude shorter than the second cable section (7).

13. The submarine power cable system (3) as claimed in any of the preceding claims, wherein the first cable section first metal sheath (19d) is configured to be connected to ground only in a region in which it is connected with the second cable section first metal sheath (31d), whereby the first cable section first metal sheath (19d) has a single point ground.

14. An offshore system (1) comprising a floating structure and a submarine power cable system (3) as claimed in any of the preceding claims, wherein the dynamic submarine power cable is suspended from the floating structure to the seabed, wherein the first cable section first metal sheath (19d) is connected to ground only in a region in which it is connected with the second cable section first metal sheath (31d), whereby the first cable section first metal sheath (19d) has a single point ground.
